(19) Europäisches Patentamt
European Patent Office
Office européen des brevets

(11) EP 4 152 835 A1

(12) EUROPEAN PATENT APPLICATION

(43) Date of publication:
22.03.2023 Bulletin 2023/12

(51) International Patent Classification (IPC):
H04W 52/02 (2009.01)    H04W 68/02 (2009.01)

(21) Application number: 22206009.7

(22) Date of filing: 14.02.2020

(52) Cooperative Patent Classification (CPC):
H04W 52/0216; H04W 52/0229; H04W 68/025;
H04W 76/28; Y02D 30/70

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 14.02.2019 US 201962805608 P

(62) Document number(s) of the earlier application(s) in
accordance with Art. 76 EPC:
20705671.4 / 3 925 312

(71) Applicant: Telefonaktiebolaget LM ERICSSON
(PUBL)
16483 Stockholm (SE)

(72) Inventors:
• LIBERG, Olof
  122 37 Enskede (SE)

• ÅSTRÖM, Magnus
  224 80 Lund (SE)
• HÖGLUND, Andreas
  170 62 Solna (SE)

(74) Representative: Ericsson
Patent Development
Torshamnsgatan 21-23
164 80 Stockholm (SE)

Remarks:
This application was filed on 08.11.2022 as a
divisional application to the application mentioned
under INID code 62.

(54) **WIRELESS COMMUNICATION DEVICE, RADIO ACCESS NETWORK NODE, METHODS, AND COMPUTER PROGRAMS FOR POWER EFFICIENT PAGING ESCALATION**

(57) A method of a wireless communication device which is arranged to operate in a cellular communication system. The comprises receiving radio signals from a radio access network node of the cellular communication system, detecting a first signal and a second signal among the signals received from the access network node of the cellular communication system. The first signal comprises a network synchronisation signal comprising information about synchronisation and an identification of a cell associated with the access network node, and the second signal comprises a notification. The method comprises to either detecting the notification at a first frequency when the received identification of the cell is equal to a previous reception of an identification of a cell at a last mutual interaction between the wireless communication device and the cellular communication system, or detecting the notification at a second frequency when the received identification of the cell differs from the previous reception of the identification of the cell at the last mutual interaction between the wireless communication device and the cellular communication system.

FIG. 3

**Description**

Technical field

The present disclosure generally relates to a wireless communication device, a radio access network node, methods therefor, and computer programs for implementing the methods. In particular the present disclosure relates to saving energy for wireless devices by discriminating between notifications for stationary and mobile devices at paging escalation.

Background

In 3GPP Release 8, the Evolved Packet System (EPS) was specified in 3GPP. EPS is based on the Long-Term Evolution (LTE) radio network and the Evolved Packet Core (EPC). It was originally intended to provide voice and mobile broadband (MBB) services but have continuously evolved to broaden its functionality. Since Release 13 NB-IoT and LTE-M are part of the LTE specifications and provide connectivity to massive machine type communications (mMTC) services. LTE-M here refers to the set of optimizations specified for LTE in terms of MTC from Release 12 and onwards.

In 3GPP Release 15, the first release of 5G was developed. This is the next generation radio access technology which is intended to serve use cases such as enhanced mobile broadband (eMBB), ultra-reliable and low latency communication (URLLC) and mMTC. 5G supports the New Radio (NR) access stratum interface and the 5G Core Network (5GC). The NR physical and higher layers are reusing parts of the LTE specification, and to that add needed components when motivated by the new use cases.

To support RRC idle and RRC inactive mobility the 3GPP specification mandates devices to measure the signal strength (RSRP) on cells in its surrounding. Based on the measured RSRP values the cells are ranked and the device should attempt to camp on the highest ranked cell, i.e. the strongest cell from a RSRP perspective. A device should regularly search for a stronger cell, and as a new cell emerges as the strongest and highest ranked cell the device should camp on that cell.

Both LTE, including LTE-M and NB-IoT, and NR supports mobile terminated reachability by means of paging.

The LTE and NR paging procedures determines a so-called paging frame (PF) where a UE based on its identity may be expecting to be paged. In case of LTE the PF is given by:

$$\text{SFN mod } T = (T \text{ div } N)*(UE\_ID \text{ mod } N)$$

Where

- T is the configured DRX cycle.
- $N = \min(T, nB)$
- $nB \in \{4T, 2T, T, T/2, T/4, T/8, T/16, T/32, T/64, T/128, T/256, T/512, T/1024\}$

  o Note that T/512, T/1024 is only applicable to NB IoT.

- UE_ID: The device identity e.g. determined as IMSI mod 1024.

Within the PF one or more subframes are configured for indicating the paging transmission starting subframe. In one example Table 1 is used to determine the number of used subframes, based on:

- $Ns = \max(1, nB/T)$
- $i\_s = \text{floor}(UE\_ID/N) \text{ mod } Ns$

In case of NB-IoT and LTE M the paging may also be distributed in the frequency domain over NB-IoT carriers, or over LTE M narrowbands, which corresponds to groups of 6 consecutive physical resource blocks (PRBs).

The actual paging transmission is defined by a LTE or NR PDCCH, a LTE-M MPDCC, or a NB-IoT NPDCCH (hereafter referred to as a (M/N)PDCCH) with cyclic redundancy check (CRC) scrambled by paging radio network temporary identifier (P-RNTI), transmitted with start in the paging frame and paging subframe. It addresses a NR/LTE/LTE-M PDSCH, or NB-IoT NPDSCH, hereafter referred to as a (N)PDSCH) which carries a set of UE identities addressing the paged UEs. Each paged UE triggers the random-access procedure for initiating a connection to the network.

The above description focuses on LTE, but these methods are to a large extent reused in NR

UE mobility is managed by the Mobility Management Entity (MME) which is a core network node that is responsible for idle mode UE paging and tracking. If a UE cannot be reached by a page in a first cell, typically the cell where the UE was last known to camp on, the MME distributes the page to more cells to try to reach the UE. This procedure is known as paging escalation.

In 3GPP Release 14 the Wake-up signal (WUS) was specified. It's a short signal that is sent just in advance of a paging occasion to indicate to the UEs that a page will be transmitted in the paging occasion. The WUS will allow devices to prolong the time spent in a power efficient mode in-between actual pages are transmitted. The time in-between the end of the WUS and the start of the (M/N)PDCCH sent in a page is known as the WUS gap.

The above information disclosed in this Background section is only for enhancement of understanding of the background of the disclosure and therefore it may contain information that does not form the prior art that is already known to a person of ordinary skill in the art.

Summary

The disclosure is based on the inventors' understanding that power can be saved for a multitude of devices in a cellular network not targeted by an escalated page, in case of the event of paging escalation. The actual method for achieving the power saving is based on the discrimination between notifications for devices not targeted by the escalated page and the devices addressed by the escalated page.

According to a first aspect, there is provided a wireless communication device arranged to operate in a cellular communication system. The wireless communication device comprises a receiver arranged to receive radio signals from a radio access network node of the cellular communication system, a signal detector arranged to detect a first signal and a second signal among the signals received from the access network node of the cellular communication system, and a controller. The first signal comprises a network synchronisation signal comprising information about synchronisation and an identification of a cell associated with the access network node. The second signal comprises a notification. The controller is arranged to cause the signal detector to either detect the notification at a first timing when the received identification of the cell is equal to a previous reception of an identification of a cell at a last mutual interaction between the wireless communication device and the cellular communication system, or detect the notification at a second timing when the received identification of the cell differs from the previous reception of the identification of the cell at the last mutual interaction between the wireless communication device and the cellular communication system.

The notification may include a wake-up signal indicating that a paging signal should be read from the received signals. The notification may include a paging signal.

The first timing may be a legacy timing for the cellular communication system and the second timing may be offset to the legacy timing, wherein the offset is derivable from signalling from the cellular communication system. The wireless communication device may be arranged to derive the offset from a signalled time offset mobility parameter, or from a predefined relation to a signalled parameter. The predefined relation may be a function including the signalled parameter, or be derived from a look-up table.

The offset may include a first offset value in number of system frames, and/or a second offset value in number of subframes.

According to a second aspect, there is provided a method of a wireless communication device which is arranged to operate in a cellular communication system. The method comprises receiving radio signals from a radio access network node of the cellular communication system and detecting a first signal and a second signal among the signals received from the access network node of the cellular communication system. The first signal comprises a network synchronisation signal comprising information about synchronisation and an identification of a cell associated with the access network node, and the second signal comprises a notification. The detecting of the notification comprises either detecting the notification at a first timing when the received identification of the cell is equal to a previous reception of an identification of a cell at a last mutual interaction between the wireless communication device and the cellular communication system, or detecting the notification at a second timing when the received identification of the cell differs from the previous reception of the identification of the cell at the last mutual interaction between the wireless communication device and the cellular communication system.

The notification may include a wake-up signal indicating that a paging signal should be read from the received signals. The notification may include a paging signal.

The first timing may be a legacy timing for the cellular communication system and the second timing ma be offset to the legacy timing, wherein the offset is derivable from signalling from the cellular communication system. The method may comprise deriving the offset from a signalled time offset mobility parameter. The method may comprise deriving the offset from a predefined relation to a signalled parameter. The predefined relation may be a function including the signalled parameter. The method may comprise deriving the predefined relation from a look-up table.

The offset may include a first offset value in number of system frames, and/or a second offset value in number of subframes.

According to a third aspect, there is provided a radio access network node arranged to operate in a cellular communication system. The radio access network node comprises an interface towards the cellular communication system, a transceiver arranged to interact by radio signals, comprising a first signal and a second signal to be transmitted, with one or more wireless communication devices, wherein the first signal comprises a network synchronisation signal comprising information about synchronisation and an identification of a cell associated with the radio access network node, and the second signal comprises a notification, and a controller arranged to determine, from a paging message for a wireless device received over the interface, a last identification of a cell to which the wireless device had a last mutual interaction between the wireless communication device and the cellular communication system, form the notification to be of either have a first timing when the determined identification of the cell is equal to an identification of a cell operated by the radio access network node, or have a second timing when the determined identification of the cell differs from the identification of the cell operated by the radio access network node.

The notification may include a wake-up signal indicating that a paging signal should be read from the transmitted signals. The notification may include a paging signal.

The first timing may be a legacy timing for the cellular communication system and the second timing may be offset to the legacy timing, wherein the offset is determined from signalling from the cellular communication system. The radio access network node may be arranged to signal the offset as a time offset mobility parameter. The radio access network node may be arranged to signal a parameter such that the offset is derivable from a predefined relation to the signalled parameter. The predefined relation may be a function including the signalled parameter. The predefined relation may be derivable from a look-up table.

The offset may include a first offset value in number of system frames, and/or a second offset value in number of subframes.

According to a fourth aspect, there is provided a method of a radio access network node which is arranged to operate in a cellular communication system. The method comprises receiving a paging message for a wireless device from another node of the cellular communication system, determining, from the paging message a last identification of a cell to which the wireless device had a last mutual interaction between the wireless communication device and the cellular communication system, and transmitting a first signal and a second signal. The first signal comprises a network synchronisation signal comprising information about synchronisation and an identification of a cell associated with the radio access network node, and the second signal comprises a notification. The notification has either a first timing when the determined identification of the cell is equal to an identification of a cell operated by the radio access network node, or a second timing when the determined identification of the cell differs from the identification of the cell operated by the radio access network node.

The notification may include a wake-up signal indicating that a paging signal should be read from the transmitted signals. The notification may include a paging signal.

The first timing may be a legacy timing for the cellular communication system and the second timing may be offset to the legacy timing, wherein the offset is derivable from signalling from the cellular communication system. The method may comprise signalling the offset as a time offset mobility parameter. The method may comprise signalling a parameter such that the offset is derivable from a predefined relation to the signalled parameter.

The predefined relation may be a function including the signalled parameter. The predefined relation may be derivable from a look-up table.

The offset may include a first offset value in number of system frames, and/or a second offset value in number of subframes.

According to a fifth aspect, there is provided a computer program comprising instructions which, when executed on a processor of a wireless communication device, causes the wireless communication device to perform the method according to the second aspect.

According to a sixth aspect, there is provided a computer program comprising instructions which, when executed on a processor of a radio access network node, causes the radio access network node to perform the method according to the fourth aspect.

Brief description of the drawings

The above, as well as additional objects, features and advantages of the present disclosure, will be better understood through the following illustrative and non-limiting detailed description of preferred embodiments of the present disclosure, with reference to the appended drawings.

Fig. 1 illustrates a set of options for power consumption reduction.
Fig. 2 schematically illustrates an approach for wake-up signals and paging.
Fig. 3 illustrates a process of paging escalation.
Fig. 4 is a flow chart schematically illustrating a method for a radio access network (RAN) node.
Fig. 5 is a block diagram schematically illustrating relevant parts of a RAN node.

Fig. 6 schematically illustrates a computer-readable medium and a processing device for a RAN node.

Fig. 7 is a flow chart schematically illustrating a method for a wireless communication device.

Fig. 8 is a block diagram schematically illustrating a wireless communication device.

Fig. 9 schematically illustrates a computer-readable medium and a processing device for a wireless communication device.

Detailed description

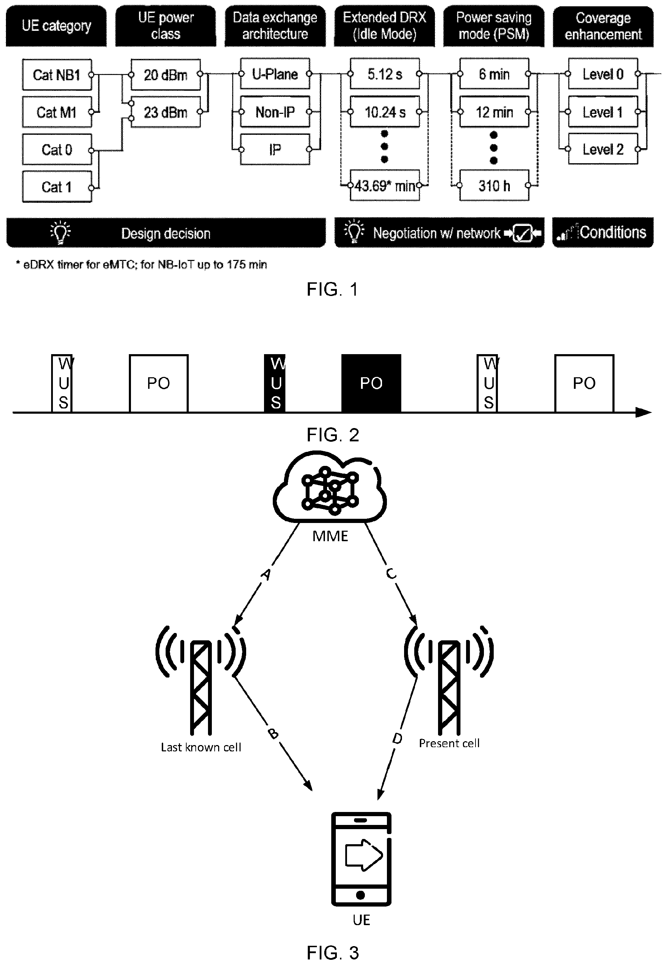

Fig. 1 illustrates a set of options for power consumption reduction. Here, the extended discontinuous reception (eDRX) mode and the power saving mode (PSM) options refer to letting the UE go to idle mode and sleep mode, respectively, where the UE in sleep mode consumes significantly less energy than in idle mode.

Periodically, the UE in sleep mode starts the receiver to make synchronisation and to check for notifications whether it should leave the sleep mode for being able to communicate with a network node. For such a notification, a 'Wake-up signal' (WUS) can be used, which is based on the transmission of a short signal that indicates to the UE that it should continue to decode a downlink (DL) control channel e.g. full MPDCCH for eMTC. If such signal is absent (e.g. discontinuous transmission (DTX) is applied by the network node, i.e. UE does not detect any signal) then the UE can go back to sleep without decoding the DL control channel. The decoding time for a WUS is considerably shorter than that of the full MPDCCH since it essentially only needs to contain one bit of information whereas the MPDCCH may contain up to 35 bits of information. This, in turn, reduces UE power consumption and leads to longer UE battery life. The 'Wake-up signal' (WUS) would be transmitted only when there is paging for the UE. But if there is no paging for the UE then the WUS will not be transmitted, i.e., implying DTX, and the UE would go back to sleep e.g. upon "detecting" DTX instead of WUS. This is illustrated in Fig. 2, where white blocks indicate possible WUS and paging occasion (PO) positions whereas the black boxes indicate actual WUS and PO positions. Presently, according to 3GPP TS 36.211, v15.4.0, section 6.11B, the WUS sequence is only dependent on the time instant of the PO to which it is associated and the eNB cell id. That implies that it is not possible to further distinguish which UE(s) that is paged among the UEs belonging to the same PO. In most cases only a single UE is paged at a time, in which case the remaining UEs will unnecessarily monitor the subsequent MPDCCH.

In 3GPP Release 14 the Wake-up signal (WUS) was specified. WUS is a short signal that is sent just in advance of a paging occasion (PO) to indicate to the UEs that a page will be transmitted in the PO. The WUS will allow devices to prolong the time spent in a power efficient mode in-between actual pages are transmitted.

The time in-between the end of the WUS and the start of the (M/N)PDCCH sent in a page is known as the WUS gap. In Release 16, it is expected that WUS should be further developed to also include UE grouping, such that the number of UEs that are sensitive to the WUS is further narrowed down to a subset of the UEs that are associated with a specific PO.

One consideration that the inventors have realized to be needed to be taken into account when designing the WUS is UE mobility. Mobility is managed by the Mobility Management Entity (MME) which is a control node that is responsible for responsible for idle mode UE (User Equipment) paging and tracking procedure including retransmissions. If a UE is not identified in a service of one node, the MME determines in which other areas served by other nodes to try to page the UE, i.e., paging escalation. For example, the MME may determine that a UE that is being paged should first be searched in the UE's last known cell, i.e. corresponding to the by the network last know location. If the UE is not found in its last known cell, the MME may escalate the paging into other cells, and eventually e.g. to a whole tracking area (TA). Fig. 3 illustrates the process of paging escalation. In (A), the MME sends a paging message to the last known cell of the UE, which then, in turn, in (B), attempts to page the UE by transmitting a wake-up signal or a paging signal defined by a PDCCH transmission scheduling a PDSCH transmission for which Cyclic Redundancy Check (CRC) is scrambled by a paging radio network temporary identifier (P-RNTI). If the eNB for the last known cell is unable to reach the UE, the MME in (C) escalates the paging to more eNBs including the present cell of the UE by sending paging messages to them, e.g. the whole tracking area, where the other eNBs attempt to page the UE (D).

From the perspective of a WUS capable UE, it is necessary that there is a standardized behaviour for WUS also for mobile UEs. For example, the UE needs to know if it should use WUS at all when waking up in another cell, and if so, which WUS it should use. According to Rel-15, UEs use WUS in all WUS configured cells. Since the Rel-15 WUS is uniquely defined by the cell ID and timing, the UE knows on forehand which WUS to look for. However, it also means that all WUS capable UEs in a whole tracking area may be falsely woken up if the MME needs to escalate paging when it is not able to find even a single a UE in its last known cell. Present basis for group WUS does not consider the mobility aspect. Instead focus is on randomization by UE identity (ID), services, DRX or eDRX periods, UE coverage levels etc. However, mobility is an important aspect for power consumption reduction, since if the UE is not found in its last known cell, paging escalation will require paging in multiple cells, e.g. a whole tracking area or more which may comprise tens or hundreds of eNBs. Hence, a single mobile UE may increase the power consumption with several magnitudes for other UEs as compared with a stationary UE. This, since it will cause all UEs belonging to the same UE group as the mobile UE within multiple eNBs or cells to be falsely woken up when the mobile UE is paged.

The inventors have realized that when a wireless network node (eNB) for transmitting a paging message to a wireless device (UE) receives a paging message from another network node, e.g., a mobility messaging entity (MME), the eNB determines from the paging message whether the paging cell is the last known cell or not. Based on the determination, the eNB will determine a signal to associate with the paging message, i.e. whether it should page stationary UEs or mobile UEs which are UEs which have moved from another cell since last interaction with the cellular network, i.e. at a last mutual interaction between the wireless communication device and the cellular communication system such as a tracking area update (TAU) or a connection setup, e.g. roughly when Non-Access Stratum (NAS) signalling occurred. This 'last known cell', i.e. the cell ID of it, is stored in MME and readily in the UE. Both the UE and the cellular wireless network will have a common understanding about when and where this occurred.

The 3GPP technologies base the RRC Idle and RRC Inactive mobility on the cell reselection procedure. Based on the outcome of the most recent search for a better cell, a device can be in one of two states where it should:

- Follow a legacy paging procedure according to existing 3GPP Release 15 specifications.
- Follow a new set of procedures for a mobile device as proposed in this disclosure.

The network will be able to reach a device with known location without paging escalation whereas that is insufficient for a device that has changed camped on cell, and not yet indicated its new location to the network. For such a device the network escalates the paging to a multitude of cells. The time at which a device may stop following the herein proposed new procedures and revert to the legacy procedures is dependent on when the device becomes known to the camped-on cell. This can be determined in several ways:

- The device monitors paging according to the new procedure in a cell until the first successfully received dedicated paging in the cell (i.e. not Direct Indication, System Information (SI) change notification, etc.).
- The device monitors paging according to the new procedure in a cell until a first won contention resolution in the cell has been performed.
- The device monitors paging according to the new procedure in a cell until the first connection has been established, i.e. setup of radio bearers and S1 connection.

Thus, a different WUS signalling procedure will be applied depending on if paging is transmitted in the last known cell or in another cell. The signal is then transmitted at a predetermined resource. Correspondingly, a method is provided for a wireless device for receiving a paging message from a wireless network node targeting the UE. First, the UE synchronizes towards the network, thereby achieving time and frequency synchronization and cell identification. Based on this, the UE may determine whether it is camping on the, by the network, last known cell or not. Having determined that, the UE may further determine a signal that is associated with the paging message. Based on the determination, the UE further determines a signal associated with the paging message to the UE. The UE will apply a different WUS signal monitoring procedure depending on whether it has found itself located in the "last known cell" or not. The UE then attempts to detect the signal in a predefined time frequency resource, and consequently can disregard notifications directed to mobility UEs if it has determined that it is still in the "last known cell". Stationary UEs can thus save energy.

In summary, this disclosure is introducing a specific WUS UE group for mobile UEs, allowing the network to page mobile UEs without falsely waking up stationary UEs and thereby reducing their longevity. An advantage is a decreased number of UEs being affected by pages addressed to another UE due to mobile UEs being paged outside of their last known cell at paging escalation. As a result, the majority of stationary UEs may remain in idle mode or faster resume idle mode and thereby increase their power savings and longevity. Further, this solution can be supported on a single NB-IoT carrier or on a single LTE-M narrowband.

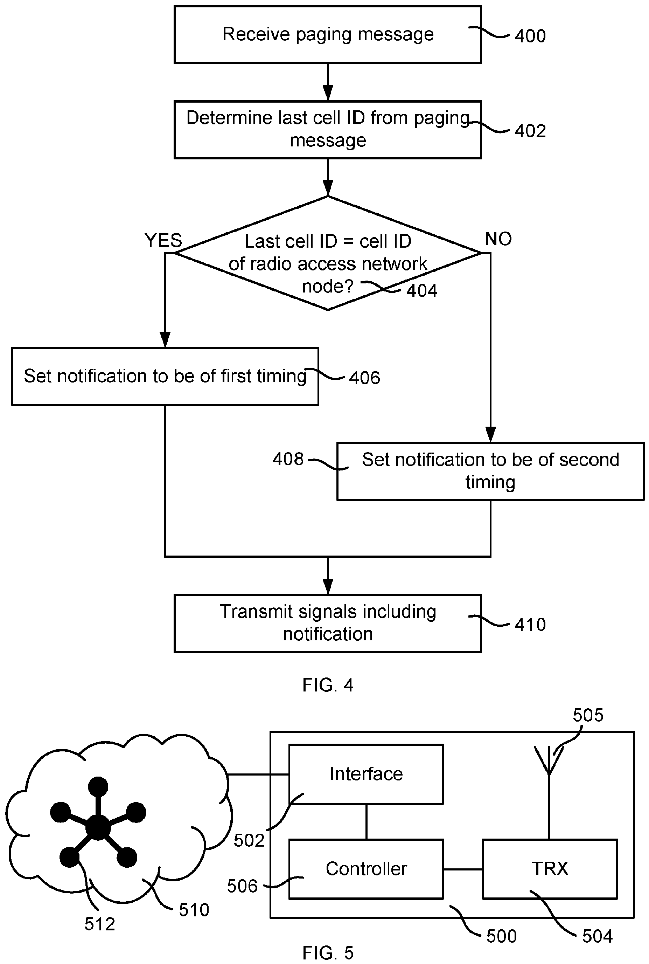

Fig. 4 is a flow chart schematically illustrating a method for a radio access network (RAN) node, such as an eNB, according to an embodiment. The RAN node receives 400 a paging message from the cellular network, e.g. from an MME node. In the paging message, there is included various information, e.g. what UE is to be paged and also information about last cell ID for the cell that UE last was connected to. Therefore, the RAN node determines 402 the received last cell ID and compares 404 it with a cell ID of the cell the RAN node is operating. If the last cell ID and the cell ID of the RAN node agrees, the RAN node arranges for a first timing of a notification to be sent, i.e. a kind of group notification for stationary UEs as discussed above. If the last cell ID is different, i.e. the UE to be notified has changed cell since last connection and for example paging escalation has been activated, the RAN node arranges for a second timing of the notification to be sent, i.e. a kind of group notification for mobile UEs as discussed above.

The notifications can include wake-up signals or paging signals, or any other kind of notifications used for UEs being in a power save mode. For example, that may be a Type 1 MPDCCH Common Search Space (CSS) for MTC and Type 1 NPDCCH CSS for NB-IoT. In some embodiments, the first type of notification is a general wake-up signal and the second type of notification is a wake-up signal only addressing the devices which themselves known that they have changed cell. In some embodiments, the first timing of the notification is for a wake-up signal and the second timing of the notification is for a paging signal where the devices which themselves known that they have changed cell look for the paging signal. Thus, the setup is in general for the embodiments such that the devices which know that they have not changed cell performs the very lean check such that they can return to idle quickly if not addressed, while the devices which know that they have changed cell may do a more energy consuming check.

In one embodiment a paging frame parameter nB is selected to a value in the range $nB \in \{T/2, T/4, T/8, T/16, T/32, T/64, T/128, T/256, T/512, T/1024\}$. This results in a paging frame determined by:

$$SFN \bmod T = K*(UE\_ID \bmod N)$$

With $K \in \{2, 4, 8, 16, 32, 64, 128, 256, 512, 1024\}$.

The paging frame used for paging escalation can then be determined as:

$$(SFN + SFN_{EscalationOffset}) \bmod T = K*(UE\_ID \bmod N)$$

With $SFN_{EscalationOffset} \in \{1, ..., K-1\}$.

Here, SFN denotes system frame number.

$SFN_{EscalationOffset}$ can be signalled to the UEs from the network. The signalling may be using dedicated or broadcasted transmissions. It may be transmitted over the access stratum or non-access stratum interface.

Table 1. Paging subframe determination in case of LTE FDD and if P-RNTI is transmitted on PDCCH or NPDCCH, or if P-RNTI is transmitted on MPDCCH with system bandwidth > 3MHz.

| Ns | PO when i_s=0 | PO when i_s=1 | PO when i_s=2 | PO when i_s=3 |
|---|---|---|---|---|
| 1 | 9 | N/A | N/A | N/A |
| 2 | 4 | 9 | N/A | N/A |
| 4 | 0 | 4 | 5 | 9 |

In one embodiment the paging starting subframe is used to differentiate an escalated page. In a simple example the starting $subframe_{Escalated}$ used for an escalated page is defined as:

$$subframe_{Escalated} = subframe_{Basic} + K$$

With

- $subframe_{Basic}$ being determined according to Table 1 for a regular, non-escalated, page.
- K being an integer, e.g. 2, selected to determine a unique set of $subframe_{Escalated}$

In one embodiment Table 1 is replaced by a new table for escalated paging. One example is given in Table 2.

Table 2. Paging subframe determination for escalated paging.

| Ns | PO when i_s=0 | PO when i_s=1 | PO when i_s=2 | PO when i_s=3 |
|---|---|---|---|---|
| 1 | 0 | N/A | N/A | N/A |
| 2 | 0 | 5 | N/A | N/A |
| 4 | 2 | 6 | 7 | 2 |

In a related embodiment, the paging subframes for an escalated paging are the additional paging subframes of one row below in Table 1. For example, if Ns = 2, the escalated paging subframes would be the additional subframes found in Ns = 3, i.e., 0 and 5 in addition to the normal, non-escalated subframes 4 and 9.

In one embodiment, the frame and subframe differentiation schemes are combined. This may be done by adding paging frames for as long as there are available non-paging frames. The subframe differentiation is applied only when all frames are paging frames.

If the device is a NR or LTE device, a separate part of the NR or LTE system bandwidth may be reserved for transmission of escalated pages. In case of NR a dedicated Control Resource Set (CORESET) possibly in a dedicated bandwidth part (BWP) may be configured for this purpose. In case of LTE a dedicated (E/M)PDCCH configured on a dedicated frequency resource may fill the same purpose.

In one embodiment the new paging procedure is based on a redefined WUS gap g0 which is derived by means of a new timeoffsetMobility parameter. The WUS configuration, provided in system information, includes time-offset between end of WUS and start of the first PO of the numPOs POs UE is required to monitor. The timeoffset in subframes, used to calculate the start of a subframe g0, is defined as follows:

- for UE using DRX, it is the signalled timeoffsetDRX;
- for UE using eDRX, it is the signalled timeoffset-eDRX-Short if timeoffset-eDRX-Long is not broadcasted;
- for UE using eDRX, it is the value selected between the timeoffset-eDRX-Short and timeoffset-eDRX-Long determined according to Table 3 if timeoffset-eDRX-Long is broadcasted.

| | | timeoffset-eDRX-Long | |
| | | 1000 ms | 2000 ms |
|---|---|---|---|
| UE Reported wakeUpSignalMinGap-eDRX | 40 ms or not reported | timeoffset-eDRX-Short | timeoffset-eDRX-Short |
| | 240 ms | timeoffset-eDRX-Short | timeoffset-eDRX-Short |
| | 1000 ms | timeoffset-eDRX-Long | timeoffset-eDRX-Long |
| | 2000 ms | timeoffset-eDRX-Short | timeoffset-eDRX-Long |

Table 3. Determination of GAP between end of WUS and associated PO

The timeoffset is used to determine the actual subframe g0 as follows (taking into consideration resultant SFN and/or H-SFN wrap-around of this computation):

g0 = PO - timeoffset - timeoffsetMobility, where PO is the Paging Occasion subframe and timeoffsetMobility is applied when the UE is not monitoring paging in its 'Last known Cell' and zero otherwise.

For UE using eDRX, the same timeoffset applies between the end of WUS and associated first PO of the numPOs POs for all the WUS occurrences for a PTW.

The timeoffset, g0, is used to calculate the start of the WUS.

The by timeoffsetMobility modified WUS gap is applied for the new paging procedure, and specified in signalling from the NW, e.g. by eNB as part of the WUS configuration in system information broadcast. As an alternative to the above, new entries or second version of Table 3 above could be applied for mobile UEs.

Further, in yet another case, the paging signal may, in case the cell ID of the cell in which the page is transmitted is different from the last known cell ID, be transmitted on a different frequency, compared to the case in which the cell ID of the cell in which the page is transmitted is the same as the last known cell ID. The frequency may i.e. be determined by a EUTRA (Evolved UMTS (Universal Mobile Telecommunications System) Terrestrial Radio Access) Absolute Radio Frequency Channel Number (EARFCN). Currently both NB-IoT and eMTC supports paging on different frequency channels, known as paging carriers in the case of NB-IoT and paging narrow bands for eMTC. A sub-set of the available paging carriers, and paging narrow bands, can be reserved for paging in case of escalating the page to cells other than the last known cell.

The RAN node has thus arranged for the suitable timing of the notification, and then transmits 410 the notification when scheduled, e.g. as discussed above with reference to Fig. 2.

With this seemingly simple approach, the RAN node actually can act in a way where UEs which are stationary can save energy significantly and do this based on very little signalling, e.g. the RAN node does not need to know much about the paging escalation.

Here, it has been demonstrated that timings are used for discriminating the notifications for the different groups, i.e. stationary and mobile, of wireless communication devices. The similar approach can be employed based on frequency, i.e. any mentioning of timing is substituted by frequency. If the device is a NR or LTE device, a separate part of the NR or LTE system bandwidth may be reserved for transmission of escalated pages. In case of NR a dedicated CORESET possibly in a dedicated bandwidth part may be configured for this purpose. In case of LTE a dedicated (E/M)PDCCH configured on a dedicated frequency resource may fill the same purpose. A further approach will be to differentiate by both timing and frequency. The reader will readily understand application of these alternatives in the description of the timing differentiating examples below.

Fig. 5 is a block diagram schematically illustrating relevant parts of a RAN node 500. Other parts normally included in a RAN node are not shown not to obscure the contribution disclosed herein. The RAN node interacts with a cellular network 510 comprising a plurality of nodes and among them a node 512 providing a paging message to the RAN node 500. The interaction is handled by an interface 502 of the RAN node 500. The RAN node 500 comprises a transceiver 504 arranged to interact by radio signals through an antenna arrangement 505 with one or more wireless communication devices. The RAN node comprises a controller 506 which is arranged to determine from the paging message received over the interface a last identification of a cell for a wireless device to which the wireless device had radio interaction. The transceiver 504 provides a first signal and a second signal over the antenna 505 wherein the first signal comprises a network synchronisation signal comprising information about synchronisation and an identification of a cell associated with the radio access network node, and the second signal comprises a notification, as discussed above. The controller 506 has thus arranged to form the notification to have either a first timing when the determined identification of the cell is equal to an identification of a cell operated by the radio access network node, or a second timing when the determined identification of the cell differs from the identification of the cell operated by the radio access network node.

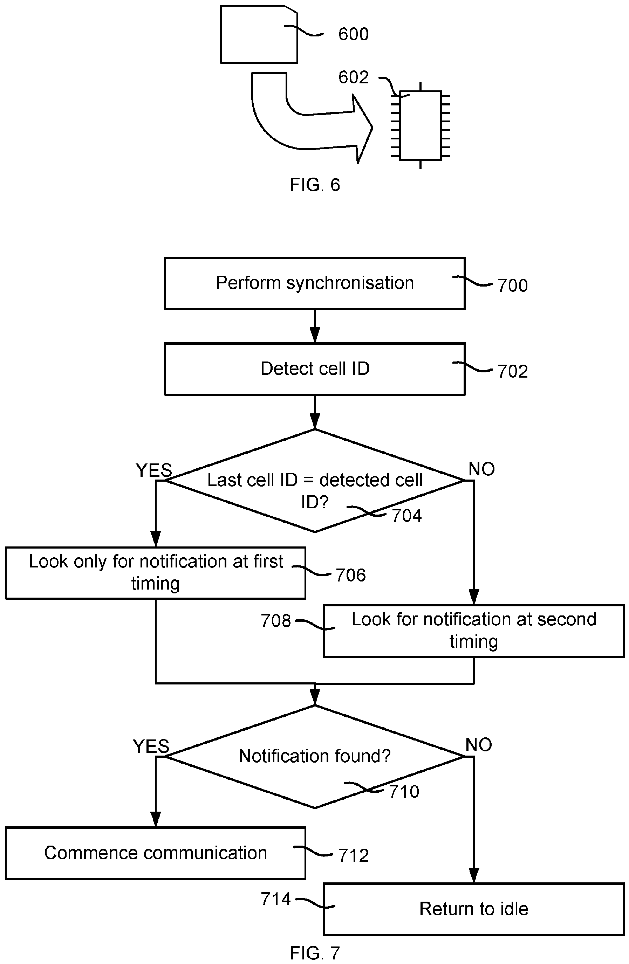

The methods according to the present disclosure is suitable for implementation with aid of processing means, such as computers and/or processors, especially for the case where the controller 506 demonstrated above comprises a processor handling notification of UEs. Therefore, there is provided computer programs, comprising instructions arranged to cause the processing means, processor, or computer to perform the steps of any of the methods according to any of the embodiments described with reference to Fig. 4. The computer programs preferably comprise program code which is stored on a computer readable medium 600, as illustrated in Fig. 6, which can be loaded and executed by a processing means, processor, or computer 602 to cause it to perform the methods, respectively, according to embodiments of the present disclosure, preferably as any of the embodiments described with reference to Fig. 4. The computer 602 and computer program product 600 can be arranged to execute the program code sequentially where actions of the any of the methods are performed stepwise, or be performed on a real-time basis. The processing means, processor, or computer 602 is preferably what normally is referred to as an embedded system. Thus, the depicted computer readable medium 600 and computer 602 in Fig. 6 should be construed to be for illustrative purposes only to provide understanding of the principle, and not to be construed as any direct illustration of the elements.

Fig. 7 is a flow chart schematically illustrating a method for a wireless communication device, such as a UE. The wireless communication device performs 700 synchronisation, e.g. by receiving primary and secondary synchronisation signals. This is performed regularly also at idle mode, although the periods may be long. Thereby, signals containing information about cell identity of the cell, i.e. network node, providing the synchronisation signals. Thus, in addition to the synchronisation 700 regarding timing and frequency, the wireless communication device detects 702 the cell identity, cell ID. The wireless communication device knows, e.g. from stored information, cell identity from last time it was in communication with the cellular network. The wireless communication device thus compares 704 the cell ID determined from synchronisation with the stored cell ID for the last cell which it was in communication with. If they are the same, the wireless communication device is considered stationary and listening 706 for notifications is performed only, among the notifications at a first timing and a second timing, for notifications at the first timing, i.e. the timing used for stationary devices, and disregards notifications at the second timing, i.e. the timing used for mobile devices. Here, "stationary" and "mobile" refer to device movements since last communication with the cellular network, and does not necessarily reflect structural features of the devices. If the cell ID determined from synchronisation and the stored cell ID for the last cell which it was in communication with differs, the wireless communication device has moved and is thus considered mobile wherein the wireless communication device listens 708 for notifications at the second timing. Here, the wireless communication device may also listen for notifications at the first timing also when the cell ID determined from synchronisation and the stored cell ID for the last cell which it was in communication with differs since it may not be evident for the wireless communication device that the current network node provides the features of differentiating between stationary and mobile devices. Listening also for notifications at the first timing can thus provide backwards compatibility.

It is determined 710 whether a relevant notification was found. If a relevant notification was found, the wireless communication device commences 712 communication, which for example may include listening for a paging message, transmitting a random access control message, or other signalling for commencing communication. If a relevant notification was not found, the wireless communication can directly go back to idle 714. This swift determination that the wireless communication device can return to idle provides for low energy consumption for devices which are not to be activated.

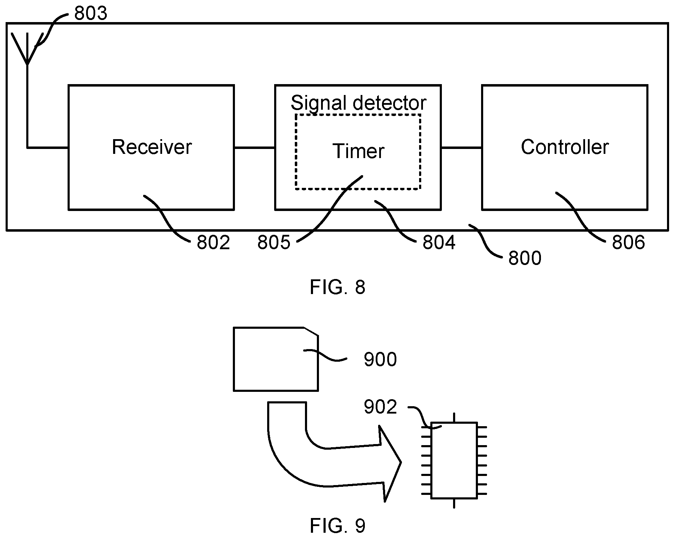

Fig. 8 is a block diagram schematically illustrating a wireless communication device 800, such as a UE. Only parts relevant to the contribution by this disclosure are shown, and other parts normally included in a wireless communication device are not shown not to obscure the contribution disclosed herein. The wireless communication device comprises a receiver 802 which is arranged to receive radio signals through an antenna arrangement 803. Among the signals received by the receiver 802, we can mention the synchronisation signals and the signals comprising the notifications, as demonstrated above. The receiver provides received signals, e.g. after provision of a baseband signal, to a signal detector 804. The signal detector 804 is for example arranged to find notification signals as demonstrated above. A neat solution for the notifications is that they have differentiated timing. The notifications of the first type and the second type may be transmitted at separate frequencies, or for some setups as alternatives for common frequency. The signal detector 804 can then for example comprise a timer 805 which controls extraction of received signals with the sought kind of notification. The not sought notification will thus not be considered, and will not trigger any commencing of communications. Here, the signal detector provides its results to a controller 806 which determines the operations of the wireless communication device 800. The signal detector 804 and the controller 806 may be implemented as a common processor performing the signal detection and control of behaviour of the wireless communication device 800.

The methods according to the present disclosure is suitable for implementation with aid of processing means, such as computers and/or processors, especially for the case where the controller 806 and the signal detector 804 demonstrated above comprises a processor handling detection of notifications. Therefore, there is provided computer programs, comprising instructions arranged to cause the processing means, processor, or computer to perform the steps of any of the methods according to any of the embodiments described with reference to Fig. 7. The computer programs preferably comprise program code which is stored on a computer readable medium 900, as illustrated in Fig. 9, which can be loaded and executed by a processing means, processor, or computer 902 to cause it to perform the methods, respectively, according to embodiments of the present disclosure, preferably as any of the embodiments described with reference to Fig. 7. The computer 902 and computer program product 900 can be arranged to execute the program code sequentially where actions of the any of the methods are performed stepwise, or on a real-time basis. The processing means, processor, or computer 902 is preferably what normally is referred to as an embedded system. Thus, the depicted computer readable medium 900 and computer 902 in Fig. 9 should be construed to be for illustrative purposes only to provide understanding of the principle, and not to be construed as any direct illustration of the elements.

The herein referred "legacy" timing and/or frequency may refer to timing/frequency given by 3GPP Release 15 for the respective signals.

Claims of Parent application:

1. A wireless communication device arranged to operate in a cellular communication system, the wireless communication device comprising

a receiver arranged to receive radio signals from a radio access network node of the cellular communication system;
a signal detector arranged to detect a first signal and a second signal among the signals received from the access network node of the cellular communication system, wherein

the first signal comprises a network synchronisation signal comprising information about synchronisation and an identification of a cell associated with the access network node, and
the second signal comprises a notification; and

a controller arranged to cause the signal detector to

either detect the notification at a first timing when the received identification of the cell is equal to a previous reception of an identification of a cell at a last mutual interaction between the wireless communication device and the cellular communication system,
or detect the notification at a second timing when the received identification of the cell differs from the previous reception of the identification of the cell at the last mutual interaction between the wireless communication device and the cellular communication system.

2. The wireless communication device of claim 1, wherein the notification includes a wake-up signal indicating that a paging signal should be read from the received signals.

3. The wireless communication device of claim 1 or 2, wherein the notification includes a paging signal.

4. The wireless communication device of any one of claims 1 to 3, wherein the first timing is a legacy timing for the cellular communication system and the second timing is offset to the legacy timing, wherein the offset is derivable from signalling from the cellular communication system.

5. The wireless communication device of claim 4, arranged to derive the offset from a signalled time offset mobility parameter.

6. The wireless communication device of claim 4, arranged to derive the offset from a predefined relation to a signalled parameter.

7. The wireless communication device of claim 6, wherein the predefined relation is a function including the signalled parameter.

8. The wireless communication device of claim 6, wherein the predefined relation is derived from a look-up table.

9. The wireless communication device of any one of claims 4 to 8, wherein the offset includes a first offset value in number of system frames.

10. The wireless communication device of any one of claims 4 to 9, wherein the offset includes a second offset value in number of subframes.

11. A method of a wireless communication device which is arranged to operate in a cellular communication system, the method comprising

receiving radio signals from a radio access network node of the cellular communication system; and
detecting a first signal and a second signal among the signals received from the access network node of the cellular communication system, wherein

the first signal comprises a network synchronisation signal comprising information about synchronisation and an identification of a cell associated with the access network node, and
the second signal comprises a notification,

wherein the detecting of the notification comprises

either detecting the notification at a first timing when the received identification of the cell is equal to a previous reception of an identification of a cell at a last mutual interaction between the wireless communication device and the cellular communication system,
or detecting the notification at a second timing when the received identification of the cell differs from the previous reception of the identification of the cell at the last mutual interaction between the wireless communication device and the cellular communication system.

12. The method of claim 11, wherein the notification includes a wake-up signal indicating that a paging signal should be read from the received signals.

13. The method of claim 11 or 12, wherein the notification includes a paging signal.

14. The method of any one of claims 11 to 13, wherein the first timing is a legacy timing for the cellular communication system and the second timing is offset to the legacy timing, wherein the offset is derivable from signalling from the cellular communication system.

15. The method of claim 14, comprising deriving the offset from a signalled time offset mobility parameter.

16. The method of claim 14, comprising deriving the offset from a predefined relation to a signalled parameter.

17. The method of claim 16, wherein the predefined relation is a function including the signalled parameter.

18. The method of claim 16, comprising deriving the predefined relation from a look-up table.

19. The method of any one of claims 14 to 18, wherein the offset includes a first offset value in number of system frames.

20. The method of any one of claims 14 to 19, wherein the offset includes a second offset value in number of subframes.

21. A radio access network node arranged to operate in a cellular communication system, the radio access network node comprising

an interface towards the cellular communication system;
a transceiver arranged to interact by radio signals, comprising a first signal and a second signal to be transmitted, with one or more wireless communication devices, wherein the first signal comprises a network synchronisation signal comprising information about synchronisation and an identification of a cell associated with the radio access network node, and the second signal comprises a notification; and
a controller arranged to

determine, from a paging message for a wireless device received over the interface, a last identification of a cell to which the wireless device had a last mutual interaction between the wireless communication device and the cellular communication system;

form the notification to be of

either have a first timing when the determined identification of the cell is equal to an identification of a cell operated by the radio access network node,

or have a second timing when the determined identification of the cell differs from the identification of the cell operated by the radio access network node.

22. The radio access network node of claim 21, wherein the notification includes a wake-up signal indicating that a paging signal should be read from the transmitted signals.

23. The radio access network node of claim 21 or 22, wherein the notification includes a paging signal.

24. The radio access network node of any one of claims 21 to 23, wherein the first timing is a legacy timing for the cellular communication system and the second timing is offset to the legacy timing, wherein the offset is determined from signalling from the cellular communication system.

25. The radio access network node of claim 24, arranged to signal the offset as a time offset mobility parameter.

26. The radio access network node of claim 24, arranged to signal a parameter such that the offset is derivable from a predefined relation to the signalled parameter.

27. The radio access network node of claim 26, wherein the predefined relation is a function including the signalled parameter.

28. The radio access network node of claim 26, wherein the predefined relation is derivable from a look-up table.

29. The radio access network node of any one of claims 24 to 28, wherein the offset includes a first offset value in number of system frames.

30. The radio access network node of any one of claims 24 to 29, wherein the offset includes a second offset value in number of subframes.

31. A method of a radio access network node which is arranged to operate in a cellular communication system, the method comprising

receiving a paging message for a wireless device from another node of the cellular communication system;

determining, from the paging message a last identification of a cell to which the wireless device had a last mutual interaction between the wireless communication device and the cellular communication system; and

transmitting a first signal and a second signal, wherein the first signal comprises a network synchronisation signal comprising information about synchronisation and an identification of a cell associated with the radio access network node, and the second signal comprises a notification,

wherein the notification has

either a first timing when the determined identification of the cell is equal to an identification of a cell operated by the radio access network node,

or a second timing when the determined identification of the cell differs from the identification of the cell operated by the radio access network node.

32. The method of claim 31, wherein the notification includes a wake-up signal indicating that a paging signal should be read from the transmitted signals.

33. The method of claim 31, wherein the notification includes a paging signal.

34. The method of any one of claims 31 to 33, wherein the first timing is a legacy timing for the cellular communication system and the second timing is offset to the legacy timing, wherein the offset is derivable from signalling from the cellular communication system.

35. The method of claim 34, comprising signalling the offset as a time offset mobility parameter.

36. The method of claim 34, comprising signalling a parameter such that the offset is derivable from a predefined relation to the signalled parameter.

37. The method of claim 36, wherein the predefined relation is a function including the signalled parameter.

38. The method of claim 36, wherein the predefined relation is derivable from a look-up table.

39. The method of any one of claims 34 to 38, wherein the offset includes a first offset value in number of system frames.

40. The method of any one of claims 34 to 39, wherein the offset includes a second offset value in number of subframes.

41. A computer program comprising instructions which, when executed on a processor of a wireless communication device, causes the wireless communication device to perform the method according to any of claims 11 to 20.

42. A computer program comprising instructions which, when executed on a processor of a radio access network node, causes the radio access network node to perform the method according to any of claims 31 to 40.

**Claims**

1. A method of a wireless communication device which is arranged to operate in a cellular communication system, the method comprising

   receiving radio signals from a radio access network node of the cellular communication system; and
   detecting (700,702) a first signal and a second signal among the signals received from the access network node of the cellular communication system, wherein

   the first signal comprises a network synchronisation signal comprising information about synchronisation and an identification of a cell associated with the access network node, and
   the second signal comprises a notification,

   wherein the detecting of the notification comprises

   either detecting (704, 706) the notification at a first frequency when the received identification of the cell is equal to a previous reception of an identification of a cell at a last mutual interaction between the wireless communication device and the cellular communication system,
   or detecting (704, 708) the notification at a second frequency when the received identification of the cell differs from the previous reception of the identification of the cell at the last mutual interaction between the wireless communication device and the cellular communication system.

2. The method of claim 1, wherein the notification includes a wake-up signal indicating that a paging signal should be read from the received signals.

3. The method of claim 1 or 2, wherein the notification includes a paging signal.

4. The method of any one of claims 1 to 3, wherein the first frequency is a legacy frequency for the cellular communication system and the second frequency is offset to the legacy frequency, wherein the offset is derivable from signalling from the cellular communication system.

5. The method of claim 4, comprising deriving the offset from a predefined relation to a signalled parameter.

6. The method of claim 5, wherein the predefined relation is a function including the signalled parameter.

7. The method of claim 5, comprising deriving the predefined relation from a look-up table.

8. The method of any one of claims 4 to 7, wherein the offset includes a first offset value in number of system frames.

9. The method of any one of claims 4 to 8, wherein the offset includes a second offset value in number of subframes.

10. The method of any one of claims 1 to 9, wherein a separate part of a system bandwidth is reserved for reception of notifications when the received identification of the cell differs from the previous reception of the identification of the cell at the last mutual interaction between the wireless communication device and the cellular communication system.

11. The method of claim 10, wherein a dedicated Control Resource Set, CORESET, is configured for the reception of notifications when the received identification of the cell differs from the previous reception of the identification of the cell at the last mutual interaction between the wireless communication device and the cellular communication system.

12. The method of claim 10, wherein a dedicated physical downlink control channel, PDCCH, is configured on a dedicated frequency resource for the reception of notifications when the received identification of the cell differs from the previous reception of the identification of the cell at the last mutual interaction between the wireless communication device and the cellular communication system.

13. A wireless communication device (800) arranged to operate in a cellular communication system, the wireless communication device comprising

a receiver (802) arranged to receive radio signals from a radio access network node of the cellular communication system;
a signal detector (804) arranged to detect a first signal and a second signal among the signals received from the access network node of the cellular communication system, wherein

the first signal comprises a network synchronisation signal comprising information about synchronisation and an identification of a cell associated with the access network node, and
the second signal comprises a notification; and

a controller (806) arranged to cause the signal detector to

either detect the notification at a first frequency when the received identification of the cell is equal to a previous reception of an identification of a cell at a last mutual interaction between the wireless communication device and the cellular communication system,
or detect the notification at a second frequency when the received identification of the cell differs from the previous reception of the identification of the cell at the last mutual interaction between the wireless communication device and the cellular communication system.

14. A radio access network node (500) arranged to operate in a cellular communication system (510), the radio access network node (500) comprising

an interface (502) towards the cellular communication system (510);
a transceiver (504) arranged to interact by radio signals, comprising a first signal and a second signal to be transmitted, with one or more wireless communication devices, wherein the first signal comprises a network synchronisation signal comprising information about synchronisation and an identification of a cell associated with the radio access network node, and the second signal comprises a notification; and
a controller (506) arranged to
determine, from a paging message for a wireless device received over the interface (502), a last identification of a cell to which the wireless device had a last mutual interaction between the wireless communication device and the cellular communication system;
form the notification to be of

either have a first frequency when the determined identification of the cell is equal to an identification of a cell operated by the radio access network node,
or have a second frequency when the determined identification of the cell differs from the identification of the cell operated by the radio access network node.

15. A method of a radio access network node which is arranged to operate in a cellular communication system, the method comprising

receiving (400) a paging message for a wireless device from another node of the cellular communication system;
determining (402), from the paging message a last identification of a cell to which the wireless device had a last mutual interaction between the wireless communication device and the cellular communication system; and
transmitting (410) a first signal and a second signal, wherein the first signal comprises a network synchronisation signal comprising information about synchronisation and an identification of a cell associated with the radio access network node, and the second signal comprises a notification,
wherein the notification has

either a first frequency (406) when the determined (402, 404) identification of the cell is equal to an identification of a cell operated by the radio access network node,
or a second frequency (408) when the determined (402, 404) identification of the cell differs from the identification of the cell operated by the radio access network node.

16. A computer program (900) comprising instructions which, when executed on a processor of a wireless communication device (800), causes the wireless communication device to perform the method according to any of claims 1 to 12.

**17.** A computer program (900) comprising instructions which, when executed on a processor of a radio access network node (500), causes the radio access network node to perform the method according to claim 15.

| UE category | UE power class | Data exchange architecture | Extended DRX (Idle Mode) | Power saving mode (PSM) | Coverage enhancement |
|---|---|---|---|---|---|
| Cat NB1 | 20 dBm | U-Plane | 5.12 s | 6 min | Level 0 |
| Cat M1 | 23 dBm | Non-IP | 10.24 s | 12 min | Level 1 |
| Cat 0 | | IP | ⋮ | ⋮ | Level 2 |
| Cat 1 | | | 43.69* min | 310 h | |

| Design decision | Negotiation w/ network | Conditions |
|---|---|---|

\* eDRX timer for eMTC; for NB-IoT up to 175 min

FIG. 1

WUS PO WUS PO WUS PO

FIG. 2

MME

A C

B D

Last known cell    Present cell

UE

FIG. 3

Receive paging message — 400

Determine last cell ID from paging message — 402

YES ← Last cell ID = cell ID of radio access network node? — 404 → NO

Set notification to be of first timing — 406

408 — Set notification to be of second timing

Transmit signals including notification — 410

FIG. 4

505

Interface

502

506 — Controller

TRX

510

512

500

504

FIG. 5

FIG. 6

| Perform synchronisation | 700 |

Detect cell ID — 702

YES ◁ Last cell ID = detected cell ID? 704 ▷ NO

Look only for notification at first timing — 706

708 — Look for notification at second timing

YES ◁ Notification found? 710 ▷ NO

Commence communication — 712

714 — Return to idle

FIG. 7

803

Receiver

Signal detector

Timer

Controller

802    805    804    800    806

FIG. 8

900

902

FIG. 9

Europäisches
Patentamt

European
Patent Office

Office européen
des brevets

# EUROPEAN SEARCH REPORT

Application Number

EP 22 20 6009

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 232 720 A1 (HUAWEI TECH CO LTD [CN]) 18 October 2017 (2017-10-18) * paragraphs [0002] - [0005], [0148], [0149], [0305], [0328] - [0349], [0450] - [0455] * | 1-17 | INV. H04W52/02 ADD. H04W68/02 |
| A | WO 2013/113988 A1 (NOKIA CORP [FI]; NOKIA SIEMENS NETWORKS OY [FI]) 8 August 2013 (2013-08-08) * paragraphs [0008], [0009], [0028], [0043]; claim 1 * | 1-17 | |
| A | WO 2011/073722 A1 (NOKIA CORP [FI]; NOKIA INC [US]; MUSIIGE DEOGRATIUS [DK]) 23 June 2011 (2011-06-23) * page 11, line 24 - page 12, line 36 * * figure 6 * | 1-17 | |
| A | ZTE: "Wake up signal function for NB-IoT", 3GPP DRAFT; R1-1804186 WAKE UP SIGNAL FUNCTION FOR NB-IOT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Sanya, China; 20180416 - 20180420 6 April 2018 (2018-04-06), XP051413511, Retrieved from the Internet: URL:http://www.3gpp.org/ftp/tsg%5Fran/WG1% 5FRL1/TSGR1%5F92b/Docs/ [retrieved on 2018-04-06] * paragraph [02.1] * | 1-17 | TECHNICAL FIELDS SEARCHED (IPC) H04W |

The present search report has been drawn up for all claims

| Place of search | Date of completion of the search | Examiner |
|---|---|---|
| The Hague | 14 February 2023 | Amorotti, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 6009

This annex lists the patent family members relating to the patent documents cited in the above-mentioned European search report.
The members are as contained in the European Patent Office EDP file on
The European Patent Office is in no way liable for these particulars which are merely given for the purpose of information.

14-02-2023

| Patent document cited in search report | | Publication date | Patent family member(s) | | Publication date |
|---|---|---|---|---|---|
| EP 3232720 | A1 | 18-10-2017 | CN | 106171021 A | 30-11-2016 |
| | | | EP | 3232720 A1 | 18-10-2017 |
| | | | JP | 2018500850 A | 11-01-2018 |
| | | | KR | 20170100657 A | 04-09-2017 |
| | | | US | 2017303237 A1 | 19-10-2017 |
| | | | WO | 2016106725 A1 | 07-07-2016 |
| WO 2013113988 | A1 | 08-08-2013 | CN | 104205947 A | 10-12-2014 |
| | | | EP | 2810490 A1 | 10-12-2014 |
| | | | US | 2015004972 A1 | 01-01-2015 |
| | | | WO | 2013113988 A1 | 08-08-2013 |
| WO 2011073722 | A1 | 23-06-2011 | CN | 102362534 A | 22-02-2012 |
| | | | EP | 2430865 A1 | 21-03-2012 |
| | | | US | 2012064899 A1 | 15-03-2012 |
| | | | WO | 2011073722 A1 | 23-06-2011 |

EPO FORM P0459

For more details about this annex : see Official Journal of the European Patent Office, No. 12/82